# EUROPEAN PATENT APPLICATION

(11) **EP 4 694 186 A1**
(43) Date of publication of application: **11.02.2026**
(21) Application number: 24934795.6
(22) Date of filing: 09.10.2024
(51) Int. Cl.: H04R 1/08

(54) **WEARABLE DEVICE**

(30) Priority: 11.04.2024 CN 202410436619
(71) Applicant: Shenzhen Shokzhear Co., Ltd., Shenzhen, Guangdong 518000 (CN)
(72) Inventor: ZHOU, Weihua, Shenzhen, Guangdong 518108 (CN); WANG, Yueqiang, Shenzhen, Guangdong 518108 (CN)
(74) Representative: Wang, Bo
(86) International application number: PCT/CN2024/123765
(87) International publication number: WO 2025/213730

(57) **Abstract**

A wearable device including a housing assembly and a microphone assembly is provided. The housing assembly includes a sound pickup hole connecting the interior of the housing assembly to the exterior of the housing assembly, and the microphone assembly is arranged in the interior of the housing assembly and is fixedly connected to the inner wall of the housing assembly. A sound inlet channel of the microphone assembly is in sealed connection with the sound pickup hole so that the microphone assembly may pick up an external sound signal input via the sound pickup hole. The housing assembly is designated as a structural mounting carrier for the microphone assembly, which reduces the use of related connecting parts, thereby fully utilizing the structural space of the housing assembly and realizing the structural fusion between the housing assembly and the microphone assembly, providing support for the miniaturization, compactness, and lightweight design of the device. At the same time, the sealed connection between the sound pickup hole and the microphone assembly provides a strong guarantee for the microphone assembly to accurately collect and identify external sound signals.

## Description

### CROSS-REFERENCE TO RELATED APPLICATIONS

The present disclosure claims priority to Chinese Application No. 202410436619.0, filed on April 11, 2024, the entire contents of which are hereby incorporated by reference.

### TECHNICAL FIELD

The present disclosure relates to the technical field of electronic devices, and in particular, to wearable devices.

### BACKGROUND

Electronic devices have become indispensable tools in people's daily lives and work with continuous proliferation thereof, leading to increasingly high demands for performance of the electronic devices. In related technologies, the electronic devices such as in-ear or ear-hanging hearing aids, headphones, etc., comprise a main body that includes an external housing, an internal framework, and a variety of functional components. These functional components are assembled into a unified structure via the internal framework and then encapsulated by the external housing to form a complete electronic device. However, such structural designs often result in large size and heavy weight, which hinders the miniaturization and lightweight design of electronic devices.

### SUMMARY

The main technical problem solved by the present disclosure is to provide a wearable device capable of realizing lightweight and miniaturization.

One embodiment provides a wearable device. The wearable device may include a housing assembly and a microphone assembly.

The housing assembly may include a sound pickup hole. The sound pickup hole may be provided through a housing wall of the housing assembly so that an interior of the housing assembly is connected to an exterior of the housing assembly.

The microphone assembly may be arranged in the interior of the housing assembly. The microphone assembly may be fixedly connected to an inner wall of the housing assembly, a sound inlet channel of the microphone assembly may be sealed to the sound pickup hole, and the microphone assembly may be configured to pick up an external sound signal input via the sound pickup hole.

In one embodiment, the inner wall of the housing assembly may be provided with a second fixing structure, and the second fixing structure may be configured to fix the microphone assembly to keep the sound inlet channel of the microphone assembly in coaxial continuity with the sound pickup hole.

In one embodiment, the second fixing structure may include a fixing retaining wall. The fixing retaining wall may protrude out of the inner wall of the housing assembly, and a holding groove may be formed between the fixing retaining wall and the inner wall of the housing assembly. A sound outlet end of the sound pickup hole may be provided within a contour of the holding groove, and at least a portion of the microphone assembly may be inserted within the holding groove.

In one embodiment, the inner wall of the housing assembly provided within the contour of the holding groove may be a bearing wall surface, and the bearing wall surface may be provided as a planar structure perpendicular to a geometric centerline of the sound pickup hole. The microphone assembly may be arranged parallel to the bearing wall surface and may be attached against the bearing wall surface.

In one embodiment, the microphone assembly may include a connecting portion and a sound pickup portion, the sound pickup portion may be provided at one end of the connecting portion and inserted into the holding groove, and a sound inlet channel of the sound pickup portion may be in sealed communication with the sound pickup hole.

A first avoidance notch may be provided on the fixing retaining wall, and the first avoidance notch may be configured to avoid the connecting portion, so that another end of the connecting portion may protrude into the holding groove.

In one embodiment, a sealant may be provided between the fixing retaining wall and the microphone assembly within the holding groove.

In one embodiment, the wearable device may include two sound pickup holes and two microphone assemblies. The two the sound pickup holes may correspond one-to-one and may be sealed to the two the microphone assemblies, and sound inlet ends of the two the sound pickup holes may be spaced apart from each other.

In one embodiment, a surface of the housing assembly provided with the sound inlet ends of the two sound pickup holes may be a first surface, the first surface may be a curved surface with a preset length, and the sound inlet ends of the two sound pickup holes may be spaced apart from each other in a length direction of the first surface.

In one embodiment, the microphone assembly may include a microphone, a first circuit board, and a protective mesh.

The protective mesh may be fixed on an inner wall of the housing assembly by covering a sound outlet end of the sound pickup hole.

The first circuit board may be stacked and fixed to a side of the protective mesh that is opposite to the sound pickup hole, the microphone may be provided on a side of the first circuit board that is opposite to the protective mesh, the first circuit board may be provided with a sound guiding hole passing through the first circuit board, and the sound pickup hole may pass through the sound guiding hole in sealed communication with a sound inlet channel of the microphone.

In one embodiment, the protective mesh may include a first adhesive layer, a mesh layer, and a second adhesive layer sequentially stacked and fixed. The first adhesive layer may be configured to stack and fix the protective mesh to the inner wall of the housing assembly, the second adhesive layer may be configured to stack and fix the protective mesh to the first circuit board, and through-hole structures may be provided at a position of the first adhesive layer corresponding to the sound pickup hole and at a position of the second adhesive layer corresponding to the sound guiding hole.

In one embodiment, the microphone assembly may further include a reinforcement plate. The reinforcement plate may be stacked and fixed between the first circuit board and the protective mesh, and a material hardness of the reinforcement plate may be greater than a material hardness of the first circuit board.

In one embodiment, the wearable device may further include a control board assembly arranged in the interior of the housing assembly, and the control board assembly may be fixedly connected to the inner wall of the housing assembly. The control board assembly may be electrically connected to the microphone assembly for receiving a sound signal captured by the microphone assembly.

In one embodiment, the microphone assembly may include a first circuit board and a microphone. The first circuit board may include a first end and a second end that are opposite to each other along a length direction of the first circuit board. The microphone may be provided at the first end of the first circuit board, and a sound inlet channel of the microphone may be in sealed communication with the sound pickup hole.

The control board assembly may include a second circuit board, the second end of the first circuit board may be connected to the second circuit board, and a material hardness of the first circuit board may be less than a material hardness of the second circuit board.

In one embodiment, the first circuit board may be a flexible printed circuit board, and the second circuit board may be a rigid printed circuit board.

In one embodiment, the first circuit board may include one or more bend regions, and the one or more bend regions may be formed between the first end and the second end of the first circuit board.

In one embodiment, the wearable device may further include a button assembly. The button assembly may be provided in the interior of the housing assembly with at least a portion exposed to the housing assembly. The button assembly may be movably connected to the inner wall of the housing assembly for cooperating with the control board assembly to input a preset command.

In one embodiment, the inner wall of the housing assembly may be further provided with a third fixing structure, the third fixing structure may be fixedly connected to the control board assembly to restrict and fix the control board assembly to a side of the button assembly that is opposite to the inner wall of the housing assembly.

In one embodiment, the third fixing structure may include a support post. The support post may protrude out of the inner wall of the housing assembly, and a position of the control board assembly corresponding to the support post may be provided with a positioning through-hole. The support post may be arranged through the positioning through-hole to maintain a preset distance between the control board assembly and the inner wall of the housing assembly.

In one embodiment, the wearable device may include two microphone assemblies, and the two microphone assemblies may be spaced apart in the interior of the housing assembly. The control board assembly may be provided between the two microphone assemblies in an arrangement direction of the two microphone assemblies.

In one embodiment, the housing assembly may include a first housing and a second housing, and the first housing may include an opening. The opening may be configured to allow the control board assembly and the microphone assembly to enter the first housing, so that the control board assembly and the microphone assembly are connected to an inner wall of the first housing, respectively.

The sound pickup hole may be provided through a housing wall of the first housing, and the second housing may seal the opening and be connected to the first housing.

In one embodiment, the first housing and the second housing may be opposite to each other and connected against each other, and surfaces where the first housing connects against the second housing may be joint surfaces

A joint surface of the first housing may be provided with a first limiting flange protruding toward the second housing, and a joint surface of the second housing may be provided with a second limiting flange protruding toward the first housing. In an inner-outer direction of the housing assembly, the second limiting flange may abut against an inner side of the first limiting flange to limit deformation of the first housing in the inner-outer direction.

In one embodiment, the second limiting flange may be provided with an avoidance structure, and the avoidance structure may be configured to avoid the control board assembly.

In one embodiment, each of the first housing and the second housing may be a one-piece structure made of polyimide material.

In one embodiment, the wearable device may further include an in-ear speaker. The in-ear speaker may include a speaker assembly and a wearable assembly, and the wearable assembly may be connected between the housing assembly and the speaker assembly.

The housing assembly may be worn between a dorsal side of an ear of a user and the head of the user, and the speaker assembly is capable of being inserted within an ear canal of the user.

In one embodiment, the wearable device may be an air-conduction hearing aid.

The wearable device, according to the above embodiments, includes a housing assembly and a microphone assembly. The housing assembly includes a sound pickup hole connecting the interior of the housing assembly to the exterior of the housing assembly, and the microphone assembly is arranged in the interior of the housing assembly and is fixedly connected to the inner wall of the housing assembly. The sound inlet channel of the microphone assembly is in sealed communication with the sound pickup hole so that the microphone assembly may pick up the external sound signal input via the sound pickup hole. The housing assembly is designated as a structural mounting carrier for the microphone assembly, which reduces the use of related connecting parts, thereby fully utilizing the structural space of the housing assembly and realizing the structural fusion between the housing assembly and the microphone assembly, providing support for the miniaturization, compactness, and lightweight design of the device. At the same time, the sealed communication between the sound pickup hole and the microphone assembly provides a strong guarantee for the microphone assembly to accurately collect and identify external sound signals.

### BRIEF DESCRIPTION OF THE DRAWINGS

FIG. 1 is a schematic diagram illustrating an exemplary wearable device according to an embodiment of the present disclosure;
FIG. 2 is a schematic diagram illustrating a cross-sectional structure (I) of a wearable device according to an embodiment of the present disclosure;
FIG. 3 is a schematic diagram illustrating a structural decomposition of a wearable device according to an embodiment of the present disclosure;
FIG. 4 shows a schematic diagram illustrating a cross-sectional structure (II) of a wearable device according to an embodiment of the present disclosure;
FIG. 5 is a schematic diagram illustrating a structural decomposition of a housing assembly of a wearable device according to an embodiment of the present disclosure;
FIG. 6 is a schematic diagram illustrating an exemplary second housing of a wearable device according to an embodiment of the present disclosure;
FIG. 7 is a schematic diagram illustrating an exemplary first housing of a wearable device according to an embodiment of the present disclosure;
FIG. 8 is a schematic diagram illustrating a structural arrangement relationship of a first assembly of a wearable device according to an embodiment of the present disclosure;
FIG. 9 is a schematic diagram illustrating a cross-sectional structure of a wearable device in a region of a microphone assembly according to an embodiment of the present disclosure;
FIG. 10 is a schematic diagram illustrating a structural decomposition of a first assembly of a wearable device according to an embodiment of the present disclosure;
FIG. 11 is a schematic diagram illustrating a structural assembly of a microphone assembly of a wearable device according to an embodiment of the present disclosure; and
FIG. 12 is a schematic diagram illustrating a structural relationship between a button assembly and a control board assembly of the wearable device according to an embodiment of the present disclosure.

Reference signs:
100, housing assembly; 100a, accommodating cavity; 110, first housing; 110a, first housing wall; 110b, second housing wall; 110c, third housing wall; 110d, fourth housing wall; 110e, fifth housing wall; 110f, sound pickup hole; 110g, button window; 120, second housing; 120a, sixth housing wall; 120b, seventh housing wall; 120c, eighth housing wall; 120d, ninth housing wall; 120e, tenth housing wall; 120f, first connection port; 120g, second connection port; 120h, battery window;
131, support arm; 132, fixing pin; 141, first positioning protrusion; 142, first positioning groove; 151, fixing retaining wall; 152, first avoidance notch; 161, support post; 171, first limiting flange; 172, second limiting flange; 173, second avoidance notch;
200, control board assembly; 210, second circuit board; 210a, positioning through-hole; 300, microphone assembly; 300a, connecting portion; 300b, sound pickup portion; 310, first circuit board; 310a, sound guiding hole; 310b, bend region; 320, microphone; 330, protective mesh; 330a, first adhesive layer; 330b, mesh layer; 330c, second adhesive layer; 340, reinforcement plate; 400, button assembly; 500, first interface assembly; 600, second interface assembly; 700, battery assembly; 810, speaker assembly; 820, wearable assembly.

### DETAILED DESCRIPTION

The present disclosure is described in further detail below by way of specific embodiments in conjunction with the accompanying drawings. Similar components in different embodiments adopt associated similar component labeling. In the following embodiments, many of the details are described to enable the present disclosure to be better understood. However, a person skilled in art may have no trouble recognizing that some of these features can be omitted in various embodiments or can be replaced by other components, materials, or methods. In some cases, some of the operations related to the present disclosure are not shown or described in the present disclosure, to avoid the core of the present disclosure from being overwhelmed by an excessive amount of description. To a person skilled in the art, the detailed description of these related operations is not necessary, and they can fully understand the related operations according to the description in the present disclosure and the general technical knowledge in the field.

In addition, the features, operations, or characteristics described in the present disclosure may be combined in any appropriate manner to form various embodiments. Meanwhile, various steps or actions in the description of the method may be switched or adjusted in order in a manner that would be apparent to a person skilled in the art. The various sequences in the present disclosure and the accompanying drawings are therefore only intended to clearly describe a particular embodiment, and do not purport to be a required sequence unless otherwise indicated that one of the sequences must be followed.

The serial numbers themselves, such as "first," "second", etc., are used herein for the purpose of distinguishing only the objects described and have no sequential or technical meaning. The terms "connection," and "coupling" in the present disclosure include direct and indirect connections (couplings) unless otherwise specified.

In the present disclosure, the in-ear hearing aid is mainly used as an example to describe the wearable device provided by the embodiments of the present disclosure. It is to be noted that the in-ear hearing aid is only a specific embodiment of the practical application of the wearable device, and the wearable device may also be other types of hearing aids, headphones, glasses, and other devices.

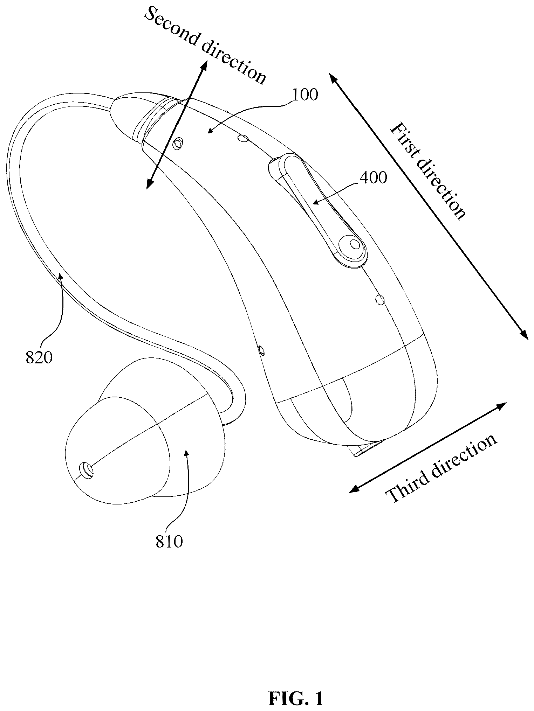

Referring to FIG. 1, the wearable device includes a housing assembly 100, a movement assembly, a speaker apparatus, and other functional components as needed.

The movement assembly may be understood as a collection of related components for realizing main functions of the wearable device. For example, the movement assembly is configured to acquire a sound signal, convert and process an electrical signal, switch on and off the wearable device, adjust a volume, supply power, etc. The movement assembly is provided in the housing assembly 100 to be built in combination with the housing assembly 100 to form a complete functional structural body. In order to facilitate differentiation and description, a combined structure of the housing assembly 100 and the movement assembly is defined as a main body of the wearable device.

The speaker apparatus may be understood as a collection of related components that realize a function of playing the sound signal of the wearable device. In some embodiments, the speaker apparatus is connected with the main body of the wearable device. For example, the speaker apparatus is connected to an exterior of the housing assembly 100.

Exemplarily, referring to FIG. 1, the speaker apparatus is an in-ear speaker including a speaker assembly 810 and a wearable assembly 820. The speaker assembly 810 is provided in the form of a structure that can be adaptably inserted into the ear canal of a user and mainly serves to play sound to the user. The wearable assembly 820 is connected between the speaker assembly 810 and the housing assembly 100 by electrically connecting the speaker assembly 810 and the movement assembly, and is mainly configured to establish a signaling connection relationship between the movement assembly and the speaker assembly 810.

The wearable assembly 820 may be made of a flexible cable with a signaling function, or the wearable assembly 820 may be made of other wires with both a signaling function and a shape memory function. One end of the wearable assembly 820 is fixed and electrically connected to the speaker assembly 810, and the other end of the wearable assembly 820 may be connected to the housing assembly 100 in a removable or non-removable manner and electrically connected to the movement assembly.

With the help of the wearable assembly 820, the main body of the wearable device may also be stably worn in the ear of the user, and the speaker assembly 810 may be inserted into the ear canal of the user. The main body of the wearable device (specifically, the movement assembly) may collect an external sound signal. By converting the sound signal into an electrical signal and outputting the electrical signal to the speaker assembly 810, the speaker assembly 810 may be used to play a corresponding sound signal, to realize the hearing aid function of the wearable device.

In some other embodiments, the speaker apparatus may also be configured in other forms in the wearable device (e.g., with reference to the movement assembly being directly provided in an interior or exterior of the housing assembly 100) to form a wearable device having different structural forms or different functions. In other words, by selectively configuring the speaker apparatus, the main body of the wearable device, and the structural relationship between the speaker apparatus and the main body , other structural forms of hearing aids or other types of wearable devices, such as headphones or eyeglasses, may also be constructed.

It is to be understood that when the wearable device is in an energized state, it is possible to realize the conversion between the sound signal (e.g., a mechanical vibration signal) and the electrical signal through the cooperation of the movement assembly and the speaker apparatus to facilitate the user to hear the sound through the ear. Generally speaking, the mechanical vibration is air conduction-based and acts on a tympanic membrane of the user mainly through the air as a medium, and then acts on an auditory nerve. The mechanical vibration is also bone conduction-based and acts directly on the auditory nerve through the user's bones and tissues as a medium. For the sound heard by the user, the former may be referred to as an air-conducted sound, and the latter may be abbreviated as a bone-conducted sound.

Based on this, by selecting and configuring the specific functional structures of the movement assembly and the speaker apparatus, the wearable device may form both the air-conducted sound and the bone-conducted sound, and may also realize both the air-conducted sound and the bone-conducted sound.

For more clear and detailed description of the structural configuration of the main body of the wearable device, based on an outer contour form of the main body of the wearable device, three directions (e.g., a first direction, a second direction, and a third direction) intersecting or perpendicular to each other are defined herein.

Exemplarily, when the wearable device is in a naturally placed state, the first direction refers to a length direction of the whole wearable device, the second direction refers to a thickness direction of the whole wearable device, and the third direction refers to a width direction of the whole wearable device.

Exemplarily, in a state in which the wearable device is normally worn between a dorsal side of the ear and the head, with the user as a reference frame, the first direction refers to an up-down direction of the user, the second direction refers to a front-back direction of the user, and the third direction refers to a left-right direction of the user.

In one embodiment, referring to FIGs. 1 to 7, the housing assembly 100 includes a first housing 110 and a second housing 120. The first housing 110 and the second housing 120 are opposite to each other and cooperatively connected to each other to form an accommodating cavity 100a in the interior of the housing assembly 100 (or between the first housing 110 and the second housing 120). The movement assembly is arranged within the accommodating cavity 100a. At least a portion of the movement assembly 100 is connected to the first housing 110, and at least another portion of the movement assembly 100 is connected to the second housing 120.

Exemplarily, the movement assembly includes a control board assembly 200, a microphone assembly 300, a button assembly 400, a first interface assembly 500, a second interface assembly 600, and a battery assembly 700. For ease of distinguishing and describing, the movement assembly in which the functional member connected to the first housing 110 is defined as a first assembly, and the functional member connected to the second housing 120 in the movement assembly is defined as a second assembly. The first assembly may include the control board assembly 200, the microphone assembly 300, and the button assembly 400. The second assembly may include the first interface assembly 500, the second interface assembly 600, and the battery assembly 700.

The microphone assembly 300 is electrically connected to the control board assembly 200 and fixed to the first housing 110, respectively. The microphone assembly 300 is mainly configured to collect the sound signal outside the wearable device (specifically outside the housing assembly 100). For example, the mechanical vibration of the relevant parts of the microphone assembly 300 is triggered due to a sound of an external environment, thus enabling the microphone assembly 300 to realize the acquisition of the sound signal.

The control board assembly 200 mainly plays a role in regulating and managing the wearable device. For example, the control board assembly 200 may receive the sound signal collected by the microphone assembly 300, and then convert the sound signal into electrical signal to be output to the speaker apparatus (specifically, the speaker assembly 810), to play the sound signal to the user with the aid of the speaker apparatus.

The button assembly 400 is movably connected to the first housing 1100 and cooperatively arranged with the control board assembly 200. Through the cooperation between the button assembly 400 and the control board assembly 200, input of a preset command may be realized. For example, through the button assembly 400, a command for controlling the wearable device to turn on and off, a command for volume adjustment, or other commands to the control board assembly 200 may be input.

The first interface assembly 500, the second interface assembly 600, and the battery assembly 700 are connected to the second housing 120 and electrically connected to the control board assembly 200 (e.g., in an electrical signal connection relationship with the control board assembly 200 via a wire assembly). The first interface assembly 500 primarily serves to connect the speaker apparatus in the main body of the wearable device. For example, the first interface assembly 500 may be detachably connected to the wearable assembly 820 in a pluggable manner, thereby establishing a signal connection relationship between the speaker assembly 810 and the control board assembly 200 so that the speaker assembly 810 can generate or play a sound signal in response to the electrical signal provided by the control board assembly 200.

The second interface assembly 600 is mainly configured to connect an external regulating device (e.g., a cell phone, a computer, etc.) to perform data transmission between the external regulating device and the wearable device. Exemplarily, a working mode, working parameters, a volume level, etc., of the wearable device may be adaptively adjusted according to the user's needs by the external regulating device. The battery assembly 700 is primarily configured to power the electricity-using components in the wearable device in order to provide support for the normal operation of the wearable device.

In some embodiments, other functional components may be added to the movement assembly, or some of the functional components may be omitted. For example, by omitting the first interface component 500, the speaker assembly 810 may be directly connected to the control board assembly 200 through the wearable component 820. As another example, the second interface assembly 600 is replaced with a wireless communication module, with the aid of which data is transmitted between the wearable device and the external regulating device.

In other words, the movement assembly may include one or more of the control board assembly 200, the microphone assembly 300, the button assembly 400, the first interface assembly 500, the second interface assembly 600, and the battery component 700.

In some embodiments, based on the form of the structure inside the housing assembly 100, the functional components in the first assembly and the second assembly may also be set up interchangeably with each other. For example, the first interface component 500 is subordinate to the first assembly and is connected to the first housing 110

That is to say, the control board assembly 200, the microphone assembly 300, the button assembly 400, the first interface assembly 500, the second interface assembly 600, and the battery assembly 700, etc., may be selectively configured in in either the first housing 110 or the second housing 120 according to the structure, layout, and functional configuration of the housing assembly 100 or the main body of the wearable device.

It should be noted that the description of the "wire assembly" is introduced herein, and the wire assembly may be a wire, a row of wires, a flexible circuit board (a flexible printed circuit (FPC)), etc., to adapt to the internal structure of the housing assembly 100 and the spatial arrangement relationship between the relevant functional components, thereby flexibly establishing electrical connections among these functional components.

Based on this, with the first housing 110 and the second housing 120 serving as mounting carriers for a plurality of functional components within the wearable device, the movement assembly may be dispersedly provided in different parts of the housing assembly 100. On the one hand, compared to the related technology, which adopts an internal skeleton independent of the housing assembly 100 as a mounting carrier for the movement assembly, the present disclosure may realize the full utilization of the structure and space of the housing and reduce the number of components inside the device, thereby facilitating the miniaturization and lightweight design of the wearable device. On the other hand, based on the structural form of the decentralized installation of the movement assembly, the wearable device is quickly disassembled and assembled. And also, by disassembling and assembling the first housing 110 and the second housing 120, the first assembly and the second assembly may be disassembled, assembled, maintained, recycled and reused, etc., in a targeted manner.

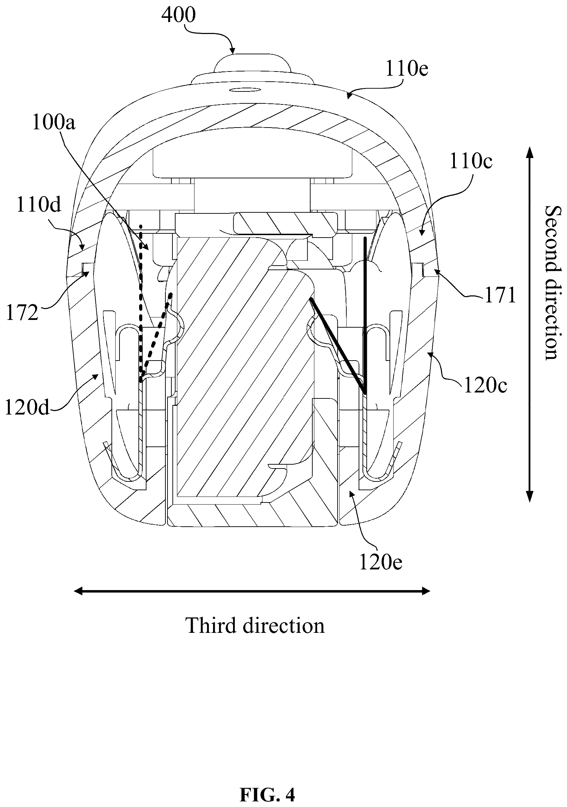

In one embodiment, referring to FIG. 4-FIG. 7, both the first housing 110 and the second housing 120 have housing structures with openings. The first housing 110 and the second housing 120 are cooperatively connected in the second direction with the openings opposite each other to form the accommodating cavity 100a.

In the case of the movement assembly, the first assembly (e.g., the control board assembly 200, the microphone assembly 300, the button assembly 400, etc.) is connected to an inner wall of the first housing 110 such that at least a portion of the first assembly is accommodated within the housing space of the first housing 110. The second assembly (e.g., the first interface assembly 500, the second interface assembly 600, the battery assembly 700, etc.) is connected to an inner wall of the second housing 120 such that at least a portion of the second assembly is accommodated within the housing space of the second housing 120.

Firstly, by connecting the first assembly to the inner wall of the first housing 110 and the second assembly to the inner wall of the second housing 120, it is possible to prevent the connecting structure between the movement assembly and the housing assembly 100 from being exposed in the housing assembly 100 and cause damage to the appearance of the main body of the wearable device, enhancing the aesthetic appearance of the main body of the wearable device, as well as the wearability.

Secondly, utilizing the housing space of the first housing 110 and the second housing 120 to accommodate the first assembly and the second assembly provides a certain protective effect, preventing the first assembly or the second assembly from being damaged due to bumping before assembling and molding the housing assembly 100.

Thirdly, by setting the first housing 110 and the second housing 120 as a housing structure with a certain volume space and an opening, it is convenient to assemble and mold the first housing 110 with the first assembly and the second housing 120 with the second assembly, respectively. The assembly of the main body of the wearable device may be easily and quickly completed after the wiring of the wire assembly is completed.

In some embodiments, the first housing 110 may be of a housing structure with an opening, and the second housing 120 may be of a cover structure. The second housing 120 is provided in the first housing 110 by sealing the opening of the first housing 110 to enclose the accommodating cavity 100a with the first housing 110. With respect to the movement assembly, the first assembly is connected to the inner wall of the first housing 110 and is accommodated in the housing space of the first housing 110. The second assembly is connected to the side of the second housing 120 that faces the first housing 110. The second assembly is equivalent to being accommodated in the housing space (e.g., the accommodating cavity 100a) of the first housing 110 after the combination of the first housing 110 and the second housing 120. Certainly, the first housing 110 may adopt a cover structure, while the second housing 120 adopts a housing structure with an opening.

Therefore, the housing assembly 100 is formed by the combination of the housing structure and the cover structure, which is not only conducive to realizing the rapid assembly of the main body of the wearable device, but also allows for the formation of different structural forms or assembling modes of the wearable device, thereby satisfying different application requirements.

In one embodiment, referring to FIGs. 4-7, an assembly structure is provided between the first housing 110 and the second housing 120. The assembly structure is mainly configured to fix the first housing 110 that is provided with the first assembly and the second housing 120 that is provided with the second assembly into a single unit, so as to roughly form a complete outer contour structure of the main body of the wearable device (e.g., the housing assembly 100). Thus, with the help of the housing assembly 100, the wearable device or the main body of the wearable device may be moved, carried, worn, operated, and used.

The assembly structure may adopt different structures according to the connection form between the first housing 110 and the second housing 120. For example, the assembly structure may be a relevant structure adapted to realize the connection form, such as gluing, welding, etc., between the first housing 110 and the second housing 120. As another example, the assembly structure may be a structure suitable for realizing a detachable connection, such as snap-fit, lock-fit, or the like, between the first housing 110 and the second housing 120.

Exemplarily, referring to FIG. 4-FIG. 7, the assembly structure includes a first fixing structure and a first positioning structure. The first fixing structure is mainly configured to fix the first housing 110 and the second housing 120 firmly into a single unit. The first positioning structure is mainly configured to locate the relative position between the first housing 110 and the second housing 120, to provide support for fast and accurate assembly of the first housing 110 and the second housing 120, and at the same time to enhance the structural combination strength between the first housing 110 and the second housing 120 in conjunction with the first fixing structure.

The first fixing structure includes a support arm 131 and a fixing pin 132. The support arm 131 protrudes out of an inner wall of the second housing 120. For example, the support arm 131 is of a one-piece structure with the second housing 120. The fixing pin 132 cooperates with the support arm 131.

The first positioning structure includes a first positioning protrusion 141 and a first positioning groove 142. The first positioning protrusion 141 protrudes out of the inner wall of the first housing 110, and the first positioning protrusion 141 and the first housing 110 are a one-piece structure. The first positioning groove 142 is integrally formed at a position of the second housing 120 corresponding to the first positioning protrusion 141.

In the process of assembling the first housing 110 and the second housing 120 to form the housing assembly 100, the first positioning protrusion 141 may be inserted into the first positioning groove 142 in advance by means of an alignment relationship between the first positioning protrusion 141 and the first positioning groove 142, so that the relative positions of the first housing 110 and the second housing 120 are defined. For example, an end surface of the opening of the first housing 110 abuts against an end surface of the opening of the second housing 120, so that the first space and the second space are connected to form the accommodating cavity 100a (at this time, the support arm 131 is located in the accommodating cavity 100a).

Afterwards, the fixing pin 132 is threaded into the interior of the housing assembly 100 from the exterior of the housing assembly 100 through the position of the first housing 110 corresponding to the support arm 131 (e.g., a pin hole structure may be provided at the position of the first housing 110 corresponding to the support arm 131), so as to thread and fix the first housing 110 and the support arm 131 into a single unit, ultimately realizing the detachable assembly fixing between the first housing 110 and the second housing 120.

In some embodiments, the support arm 131 and the fixing pin 132, the first positioning protrusion 141, and the first positioning groove 142 may also be positionally switched. For example, the support arm 131 protrudes out of the inner wall of the first housing 110, and the first positioning protrusion 141 protrudes out of the inner wall of the second housing 120.

With the cooperation of the first fixing structure and the first positioning structure, the assembly and fixing of the first housing 110 and the second housing 120 may be realized easily, quickly and accurately, to effectively enhance the structural solidity of the housing assembly 100 (or the outer shell of the device), and also to provide structural support for the disassembling and assembling of the main body of the wearable device or the housing assembly 100.

For example, in the process of assembling the main body of the wearable device or the housing assembly 100, the first positioning protrusion 141 may be first inserted into the corresponding first positioning groove 142, and the fixing pin 132 is then inserted using a cooperation relationship between the support arm 131 and the fixing pin 132, to finally assemble and fix the first housing 110 and the second housing 120 to form the housing assembly 100. In this way, the accuracy of the combination of the first housing 110 and the second housing 120 may be ensured.

For example, when the main body of the wearable device needs to be disassembled and maintained, only the fixing pin 132 needs to be withdrawn to realize the disassembly of the housing assembly 100, so as to inspect and maintain the internal structure of the main body of the wearable device and the related components.

In some embodiments, the first fixing structure and the first positioning structure may also be of other structural forms.

For example, a plurality of snap structures that cooperate with each other are provided on the first housing 110 and the second housing 120, and the snap structures are utilized to replace the first fixing structure and the first positioning structure to realize the assembly and fixing of the first housing 110 and the second housing 120.

As another example, a convex shaft structure is provided on a position on the inner wall of the first housing 110 corresponding to the support arm 131, and a pin hole structure is provided on the support arm 131 for the insertion and embedding of the convex shaft structure, so that the first fixing structure is formed through the cooperation of the convex shaft structure and the pin hole structure. Therefore, with the cooperation of the first positioning structure, the first housing 110 and the second housing 120 are located and fixed at different positions and in different directions.

In some embodiments, the first fixing structure may be omitted, and the first housing 110 and the second housing 120 may be pre-located by setting one or more first positioning structures, then the first housing 110 and the second housing 120 may be fixed by gluing, welding, or the like.

Certainly, it is also possible to omit the first positioning structure. The first housing 110 and the second housing 120 are fixed and connected from a plurality of different positions by providing a plurality of sets of support arms 131 and fixing pins 132. For these and other reasons, they will not be elaborated further here.

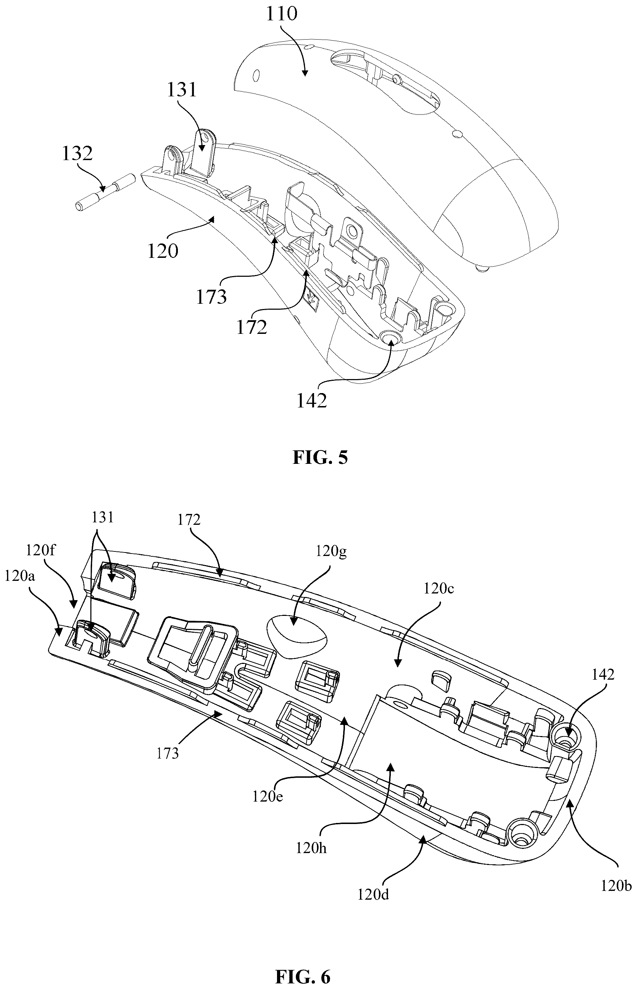

In one embodiment, referring to FIG. 4 and FIG. 5, the first housing 110 and the second housing 120 are opposite to each other and cooperatively connected to each other in the second direction to form the housing assembly 100, and the first fixing structure and the first positioning structure are provided on two ends of the housing assembly 100 that are opposite to each other in the first direction. For the convenience of description, the two ends of the housing assembly 100 that are opposite to each other in the first direction or the length direction may be defined as a first end and a second end of the housing assembly 100. When the wearable device is in a normally worn state, the first end of the housing assembly 100 may be a top end of the housing assembly 100, and the second end of the housing assembly 100 may be a bottom end of the housing assembly 100. The first fixing structure is provided at the first end of the housing assembly 100, and the first positioning structure is provided at the second end of the housing assembly 100.

By providing the first fixing structure and the first positioning structure at the two ends of the housing assembly 100 that are opposite to each other, the first housing 110 and the second housing 120 may be located and fitted together with the help of the first positioning structure in advance during the assembly process, and then the first housing 110 and the second housing 120 may be fixed with the help of the cooperation relationship between the fixing pin 132 and the support arm 131. In this way, it is conducive to the assemblers to quickly and accurately identify the assembly direction of the first housing 110 and the second housing 120 and to improve the efficiency of assembling the housing assembly 100 or the main body of the wearable device. Meanwhile, it is also convenient to inspect and maintain the housing assembly 100 and the related functional components by dismantling the housing assembly 100.

In some embodiments, the control board assembly 200, the microphone assembly 300, or the like are connected to the inner wall of the first housing 110. The first interface assembly 500, the battery assembly 700, or the like are connected to the inner wall of the second housing 120. The first housing 110 and the second housing 120 are both of a housing structure. The support arm 131 protrudes out of the inner wall of the second housing 120 substantially along the second direction toward a side where the first housing 110 is located. The fixing pin 132 is arranged through the first housing 110 and the support arm 131 substantially along the third direction. Accordingly, the first positioning protrusion 141 protrudes out of the inner wall or the end surface of the opening of the second housing 120 substantially in the second direction toward the side where the second housing 120 is located.

Therefore, based on the differentiated setting of the arrangement direction of the support arm 131 and the first positioning protrusion 141, the combination of the second housing 120 and the second assembly may be regarded as the main body for installation. This guides assemblers to quickly and accurately assemble the combination of the first housing 110 and the first assembly into the first housing 110 on the main body for installation.

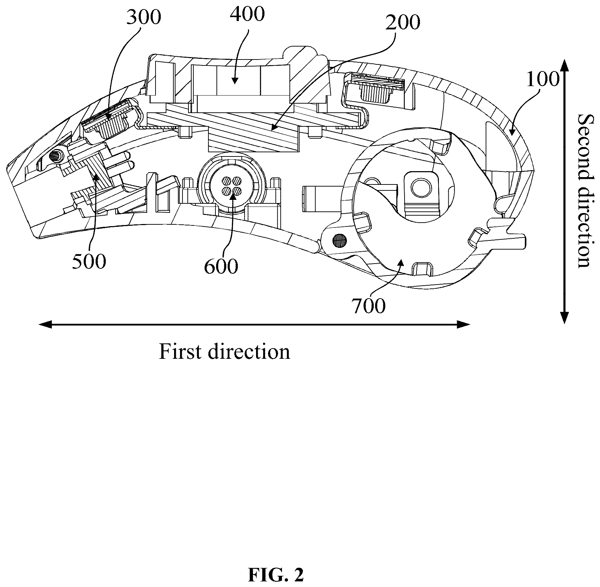

In one embodiment, referring to FIG. 2-FIG. 12, the first housing 110 and the second housing 120 adopts a housing structure, and the movement assembly includes a control board assembly 200, a microphone assembly 300, a button assembly 400, a first interface assembly 500, a second interface assembly 600, and a battery assembly 700.

For ease of differentiation and description, two housing walls of the first housing 110 that are opposite to each other in the first direction are defined as a first housing wall 110a and a second housing wall 110b, two housing walls that are opposite to each other in the third direction are defined as a third housing wall 110c and a fourth housing wall 110d, and a housing wall that is connected between the first housing wall 110a, the second housing wall 110b, the third housing wall 110c, and the fourth housing wall 110d in the second direction is defined as a fifth housing wall 110e.

Two housing walls of the second housing 120 that are opposite to each other in the first direction are defined as a sixth housing wall 120a and a seventh housing wall 120b, two housing walls that are opposite to each other in the third direction are defined as an eighth housing wall 120c and a ninth housing wall 120d, and a housing wall that is connected between the sixth housing wall 120a, the seventh housing wall 120b, the eighth housing wall 120c, and the ninth housing wall 120d in the second direction is defined as a tenth housing wall 120e.

The combination of the first housing wall 110a and the sixth housing wall 120a forms a first side wall of the housing assembly 100, and the combination of the second housing wall 110b and the seventh housing wall 120b forms a second side wall of the housing assembly 100. The fifth housing wall 110e and the tenth housing wall 120e may be understood to be a third side wall and a fourth side wall of the housing assembly 100 that are opposite to each other in the second direction. The combination of the third housing wall 110c and the eighth housing wall 120c forms a fifth side wall of the housing assembly 100, and the combination of the fourth housing wall 110d and the ninth housing wall 120d forms a sixth side wall of the housing assembly 100. It will be appreciated that the first side wall, the second side wall, the third side wall, the fourth side wall, the fifth side wall, and the sixth side wall of the housing assembly 100 are connected to enclose the accommodating cavity 100a.

Referring to FIGs. 2, 3, and 8, the control board assembly 200 is provided in the interior of the housing assembly 100 (e.g., fixedly connected to the third side wall (e.g., the fifth housing wall 110e)). The microphone assembly 300, which may be a collection of related functional components capable of forming an air-conducted sound, is fixedly provided on the third side wall, and maintains an air path connection with the exterior of the housing assembly 100 at the third side wall.

Exemplarily, a sound pickup hole 110f may be provided through the position on the third side wall (e.g., the fifth housing wall 110e) corresponding to the microphone assembly 300, and the sound pickup hole 110f is connected to the microphone assembly 300. The external sound signal is conducted to the microphone assembly 300 using air as a medium to cause the microphone assembly 300 to realize the acquisition of the sound signal by generating mechanical vibration.

Exemplarily, a sound conduit line may also be provided within the accommodating cavity 100a, and the microphone assembly 300 is connected to the exterior of the housing assembly 100 via the sound conduit line to enable the acquisition of the sound signal.

In some embodiments, see FIG. 2, the wearable device includes two microphone assemblies 300, and the two microphone assemblies 300 are arranged on two sides of the control board assembly 200 that are opposite to each other in the first direction. With respect to the main body of the wearable device, the two microphone assemblies 300 may be configured to capture the sound signal from different directions.

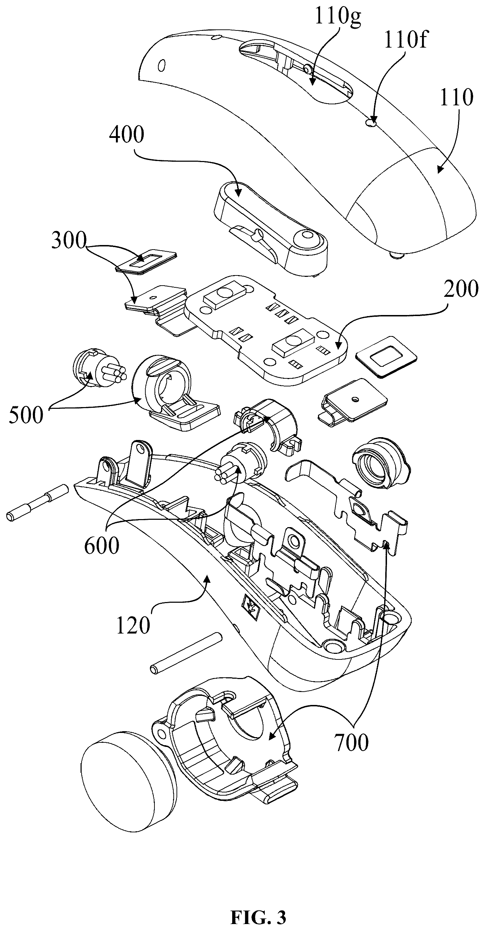

Referring to FIGs. 2 and 3, the button assembly 400 is provided in the accommodating cavity 100a in the form of a movable connection (e.g., a rotational connection, a sliding connection, etc.) with the inner wall of the first housing 110, and the button assembly 400 is at least partially exposed to the third side wall.

For example, the button assembly 400 is arranged on a side of the control board assembly 200 facing the third side wall in the second direction, a button window 110g is provided through a position of the third side wall corresponding to the button assembly 400, and the button assembly 400 is exposed and protrudes out of the button window 110g.

By applying a pressing force toward the control board assembly 200 to the button assembly 400, the button assembly 400 may be induced to press button switches on the control board assembly 200 to realize the input of the preset command.

In some embodiments, the button assembly 400 may also include a switching component capable of generating an electrical signal, the button assembly 400 is electrically connected to the control board assembly 200, and the command information is input to the control board assembly 200 by triggering the button assembly 400.

Referring to FIGs. 2, 3, and 6, the first interface assembly 500 is fixedly connected to the second housing 120 (e.g., fixed to the fourth side wall) by at least partially exposing to the first side wall and is arranged in the accommodating cavity 100a. Exemplarily, a first connection port 120f may be provided through the first side wall, and an interface end of the first interface assembly 500 may be directly opposite the first connection port 120f. The interface end of the first interface assembly 500 may extend into the first connection port 120f and may also extend out of the housing assembly 100 from the first connection port 120f.

Accordingly, an interface structure capable of being in pluggable adaptive connection with the first interface assembly 500 may be provided on the speaker apparatus (specifically, at the end of the wearable assembly 820 away from the speaker assembly 810). The interface structure and the first interface assembly 500 are used to fix the speaker apparatus to the main body of the wearable device to realize an electrical connection between the speaker apparatus and the movement assembly (e.g., the control board assembly 200).

Referring to FIGs. 2, 3, and 6, the second interface assembly 600 is fixedly connected to the second housing 120 (e.g., fixed to the fourth side wall) by at least partially exposing to the fifth side wall and is arranged within the accommodating cavity 100a. Exemplarily, the second connection port 120g may be provided through the fifth side wall (e.g., the eighth housing wall 120c), the interface end of the second interface assembly 600 may be arranged opposite the second connection port 120g, and the interface end of the second interface assembly 600 may also extend into the second connection port 120g. When applying the wearable device, the second interface assembly 600 may be utilized to connect to an external regulating device such as a cell phone, a computer, or the like, in order to make adaptive adjustments to the working mode, the working parameters, or the like of the wearable device according to the user's needs.

Referring to FIG. 2, FIG. 4, and FIG. 6, the battery assembly 700 may be fixedly connected to the second housing 120 or movably connected to the second housing 120. Exemplarily, the battery window 120h may be provided in a region where the second side wall meets the fourth side wall, and the battery assembly 700 is rotatably connected to the second housing 120, so that the battery assembly 700 may enter and exit the accommodating cavity 100a through the battery window 120h by rotating the battery assembly 700, which facilitates battery replacement.

Based on this, by dispersing the various parts of the movement assembly in different positions or different directions of the housing assembly 100, not only the structure and space of the housing assembly 100 is utilized reasonably to ensure the performance of the wearable device, but also the operation of the wearable device is facilitated.

For example, by arranging the first interface assembly 500 and the battery assembly 700 at two opposite ends of the main body of the wearable device in the first direction, and arranging the button assembly 400 in a position between the first interface assembly 500 and the battery assembly 700 in the first direction, on the one hand, it is not only convenient to connect the speaker apparatus (e.g., the wearable component 820) via the first interface assembly 500, but also convenient to replace the battery in the battery assembly 700. On the other hand, when the device is in a worn state, the button assembly 400 may be located at a position substantially in the middle of the rear side or at a position at the lower rear side of the main body of the wearable device, which not only facilitates operation of the button assembly 400, but also avoids structural interference of the first interface assembly 500 and the battery assembly 700 with the button assembly 400.

As another example, by setting the third side wall in the form of a curved surface structure and arranging the two microphone assemblies 300 on two opposite sides of the button assembly 400 or the control board assembly 200 in the first direction, the sound pickup holes 110f corresponding to the two microphone assemblies 300 may be made to face different directions, thereby effectively avoiding that the external sound signal is blocked by the body parts of the user, ensuring the effect of the microphone assemblies 300 on the acquisition of the sound signal.

In some embodiments, when the wearable device is in a normally worn state, such as a state in which the main body of the wearable device relies on the wearable assembly 820 to be suspended on the dorsal side of the ear of the user, and the speaker assembly 810 is inserted into the ear canal of the user.

The first side wall is a side wall facing the front side of the user in the first direction, the second side wall is a side wall facing the lower side of the ear of the user in the first direction, and the third side wall is a side wall back away from area region where the head of the user meets the dorsal side of the ear in the second direction. The fourth side wall is a side wall facing or touching the region where the head of the user meets the dorsal side of the ear in the second direction, the fifth side wall is a side wall facing or touching the dorsal side of the ear of the user in the third direction, and the sixth side wall is a side wall facing or touching the head of the user in the third direction.

Referring to FIG. 1 to FIG. 3 and FIG.5, the dimensions of the housing assembly 100 in the first direction are set to be larger than the dimensions of the housing assembly 100 in the second direction and the third direction. The third side wall and the fourth side wall are set to be curved surface structures capable of adapting to the physiological structural direction of the region where the dorsal side of the ear meets the head. For a geometric centerline of the housing assembly 100 in the first direction, the geometric centerline is provided as an arcuate segment.

In this way, based on the dimensional differences of the housing assembly 100 in the different directions and the structural form of the side walls, the outer contour of the housing assembly 100 or the main body of the wearable device is constructed as a mimetic structure, to enable the housing assembly 100 or the main body of the wearable device to be adapted to physiological structural morphology between the dorsal side of the ear and the head, so as to be worn on the ear in the form of being clamped or hanging on the ear.

In embodiments in which the housing assembly 100 adopts the mimetic structure, the dimension of the housing assembly 100 in the third direction may be set such that the dimension of the housing assembly 100 in the third direction is progressively decreasing from the side on which the second side wall is located towards the side on which the first side wall is located. For example, the dimension of the first end of the housing assembly 100 in the third direction is smaller than the dimension of the second end in the third direction. As a result, it is possible to make the width dimension of the end of the main body of the wearable device that connects the speaker in the first direction (e.g., the end at which the first interface assembly 500 is located) smaller than the width dimension of the end at which the battery assembly 500 is located, which accommodates the requirements of the battery assembly 500 for the space dimension of the housing assembly 100.

In some embodiments, the housing assembly 100 is made of polyimide (PI), such as a one-piece structure in which both the first housing 110 and the second housing 120 are made of PI, both of which are connected opposite to each other to form the housing assembly 100.

Compared to related technologies in which the outer shell of the wearable device is usually made of polycarbonate (PC), ABS plastic (e.g., a terpolymer formed from the three monomers: acrylonitrile (A), butadiene (B), and styrene (S)), etc., in this embodiment, based on the good biocompatibility, mechanical strength and other characteristics of the PI material, the structural form (including an appearance form) of the housing assembly 100 may be made more stable, and the thickness of the housing wall is thinner, which is conducive to realizing the miniaturization and lightweighting of the wearable device, and enhancing the stability of the overall structure of the housing assembly 100.

In one embodiment, referring to FIG. 2, FIG. 3, and FIG. 7-FIG. 12, the housing assembly 100 includes the first housing 110, and the movement assembly includes the microphone assembly 300. The first housing 110 utilizes a housing structure with an opening, and the first housing 110 includes the sound pickup hole 110f provided through the fifth housing wall 110e to connect the accommodating cavity 100a to the exterior of the housing assembly 100 via the sound pickup hole 110f. The microphone assembly 300 is understood to be a collection of related devices capable of forming an "air-conducted sound", the microphone assembly 300 is provided in the accommodating cavity 100a (e.g., in the housing space of the first housing 110) and fixed to the inner wall (e.g., the fifth housing wall 110e) of the first housing 110, and the sound inlet channel of the microphone assembly 300 is in a sealed communication with the sound pickup hole 110f.

In this way, by using the first housing 110 as a mounting carrier for the microphone assembly 300, the structural space of the housing assembly 100 may be fully utilized, and a count of related parts may be reduced, so as to provide support for lightweighting, miniaturization, etc., of the wearable device. By utilizing the sealed communication relationship between the microphone assembly 300 and the sound pickup hole 110f, the external sound signal may enter into the sound inlet channel of the microphone assembly 300 via the sound pickup hole 110f by using air as a medium to trigger mechanical vibration of the relevant components of the microphone assembly 300, thereby realizing the acquisition of external sound signal through the acquisition and conversion of the mechanical vibration signal.

It should be noted that a person skilled in art should be aware of the basic working principle of the air-conducted microphone, and therefore, the specific process and principle of the acquisition of the sound signal by the microphone assembly 300 will not be explained herein.

In one embodiment, the wearable device includes two sound pickup holes 110f and two microphone assemblies 300. The two sound pickup holes 110f correspond one-to-one and are sealed to the two microphone assemblies 300. In the case of the sound pickup holes 110f, sound inlet ends of the two sound pickup holes 110f are spaced apart from each other, to cooperate with the microphone assemblies 300 to realize the acquisition of the external sound signal at different positions or in different directions.

Exemplarily, the third side wall (e.g., the fifth housing wall 110e) of the housing assembly 100 has a curved surface structure, and the sound inlet ends of the two sound pickup holes 110f are spaced apart from each other on the outer surface of the third side wall in the first direction. It is also to be understood that a surface of the housing assembly 100 on which the sound inlet ends of the sound pickup holes 110f are provided may be defined as a first surface, which is a curved surface with a preset length in the first direction, and the two sound pickup holes 110f are spaced apart from each other in a length direction of the first surface. Therefore, based on the characteristics of the curved surface structure, the microphone assembly 300 can collect the external sound signal from different directions, thereby effectively avoiding the external sound signal from being obstructed by the body parts of the user, and ensuring the effect of the microphone assembly 300 on the sound signal acquisition.

In other embodiments, according to the difference in the functional configuration or structural form of the microphone assembly 300, the two sound pickup holes 110f may also be sealed to the same sound inlet channel of the same microphone assembly 300 at the same time, to meet different application requirements.

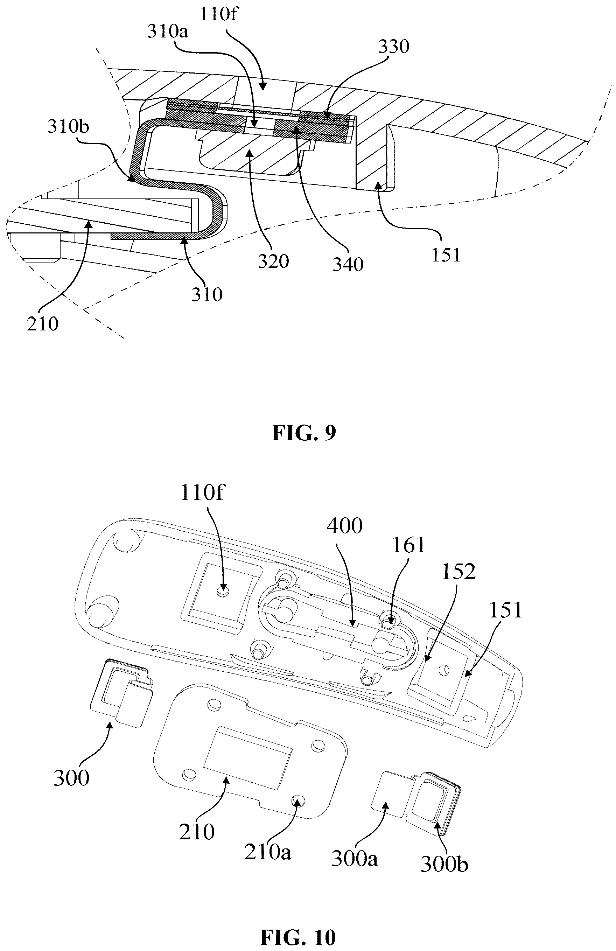

In one embodiment, referring to FIGs. 9-11, the microphone assembly 300 includes a first circuit board 310, a microphone 320, and a protective mesh 330. The protective mesh 330 is fixed to an inner surface of the fifth housing wall 110e by covering a sound outlet end of the sound pickup hole 110f. For example, the protective mesh 330 is glued and fixed to the fifth housing wall 110e. The first circuit board 310 is stacked and fixed to a side of the protective mesh 330 that is opposite to the sound pickup hole 110f (e.g., the first circuit board 310 is glued to the protective mesh 330), the microphone 320 is provided on a side of the first circuit board 310 that is opposite to the protective mesh 330, and a position of the first circuit board 310 corresponding to the sound inlet channel of the microphone 320 is provided with a sound guiding hole 310a.

The microphone 320 serves as the main component in the microphone assembly 300 for realizing the acquisition of the sound signal, the first circuit board 310 serves as the mounting carrier of the microphone 320, and an electrical signal connection relationship is established between the microphone 320 and the control board assembly 200 through the first circuit board 310.

On the one hand, based on the cooperation between the first circuit board 310 and the protective mesh 330, it is possible to securely fix the microphone 320 to the first housing 110, so as to enable the sound inlet channel of the microphone 320 to remain in coaxial sealed communication with the sound pickup hole 110f through the sound guiding hole 310a. On the other hand, the protective mesh 330 may prevent contaminants such as water, dust, or the like outside the wearable device from intruding into the microphone assembly 300 via the sound pickup hole 110f, thereby ensuring the normal operation of the microphone assembly 300.

In other embodiments, the microphone assembly 300 may also adopt other structural forms. For example, the protective mesh 330 is omitted, and the microphone 320 is provided on a side of the first circuit board 310 that faces the sound pickup hole 110f. With the structural relationship between the first circuit board 310 and the first housing 110, the sound inlet channel of the microphone 320 may be directly sealed to the sound pickup hole 110f.

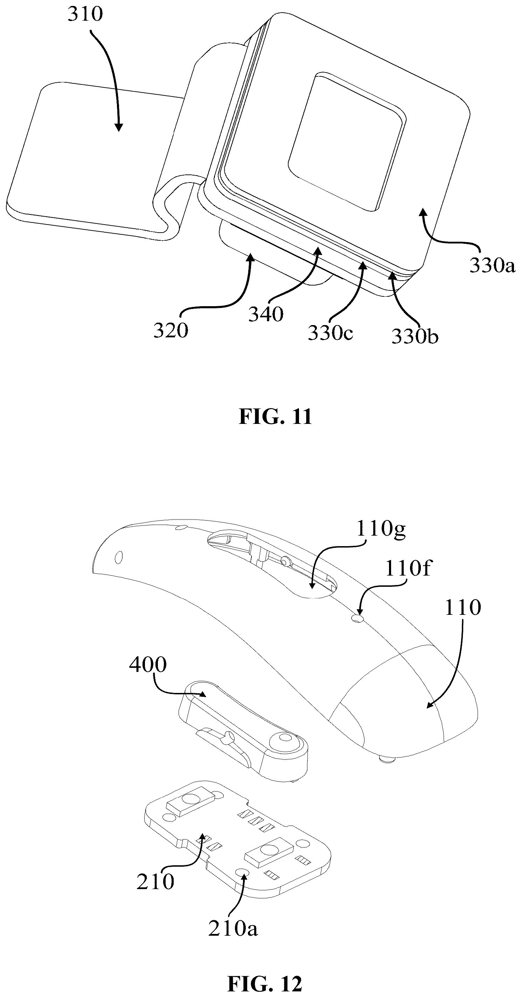

In one embodiment, referring to FIG. 9 and FIG. 11, the microphone assembly 300 further includes a reinforcement plate 340 stacked and fixed between the first circuit board 310 and the protective mesh 330, such as adhesively fixed to the first circuit board 310 and the protective mesh 330. A material hardness of the reinforcement plate 340 is greater than a material hardness of the first circuit board 310. The reinforcement plate 340 is mainly configured to provide structural support for the first circuit board 310 to avoid the first circuit board 310 from being structurally deformed or damaged, which may affect the effect of sealing the microphone 320 and the sound pickup hole 110f.

Exemplarily, the first circuit board 310 may be a flexible printed circuit (FPC), and the reinforcement board 340 may be made of other materials (e.g., metal, plastic, etc.) with greater material hardness than the first circuit board 310.

Thus, by utilizing the material characteristics of the first circuit board 310 that can undergo flexible deformation, it may be adapted to the setting position of the control board assembly 200 within the housing assembly 100, and realize the electrical signal connection between the microphone assembly 300 and the control board assembly 200. The presence of the reinforcement plate 340 may effectively avoid the first circuit board 310 from undergoing structural deformation that affects the sealing communication effect between the microphone 320 and the sound pickup hole 110f.

In one embodiment, referring to FIG. 11, the protective mesh 330 includes a first adhesive layer 330a, a mesh layer 330b, and a second adhesive layer 330c sequentially stacked and fixed. The first adhesive layer 330a and the second adhesive layer 330c may adopt a double-sided adhesive or other suitable adhesive materials according to the actual needs. The second adhesive layer 330c may be configured to stack and fix the first circuit board 310 (or the reinforcement plate 340) and the mesh layer 330b, while the first adhesive layer 330a may be configured to fix the whole microphone assembly 300 on the inner wall of the first housing 110b, thereby realizing the rapid assembly of the microphone assembly 300 with the first housing 110b.

In other embodiments, the protective mesh 330 may also be of other structures, such as the mesh layer 330 being fixed by being clamped and pressed between the first circuit board 310 (or the reinforcement plate 340) and the inner wall of the first housing 110b.

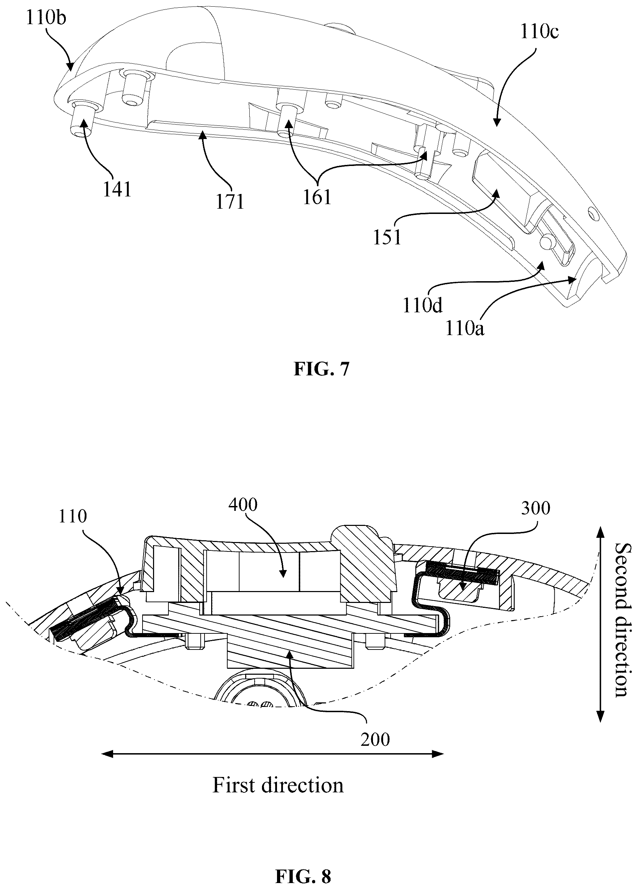

In one embodiment, referring to FIGs. 7, 9, and 10, the inner wall of the first housing 110 (e.g., a surface of the fifth housing wall 110e) is provided with a second fixing structure. The second fixing structure may include a fixing retaining wall 151 protruding out of the inner wall of the first housing 110. For example, the fixing retaining wall 151 is integrally formed with the first housing 110. A holding groove is formed between the fixing retaining wall 151 and the inner wall of the fifth housing 110e. At least a portion of the microphone assembly 300 (specifically the end at which the microphone 320 is located) is accommodated in the holding groove, and the sound outlet end of the sound pickup hole 110f is located within the contour of the holding groove.

On the one hand, with the help of the holding groove formed between the fixing retaining wall 151 and the inner wall of the first housing 110, it is convenient to quickly locate the mounting position of the microphone assembly 300, so as to provide support for the structural combination of the microphone assembly 300 and the first housing 110. On the other hand, with the help of the fixing retaining wall 151, the microphone assembly 300 may be restricted to a preset position within the accommodating cavity 100a (e.g., within the holding groove), thereby ensuring that the sound inlet channel of the microphone 320 may remain in coaxial sealed communication with the sound pickup hole 110f.

In some other embodiments, the second fixing structure may also adopt other suitable structural forms, for example, on the premise of ensuring that the microphone assembly 300 is sealed to the sound pickup hole 110f, the second fixing structure may be snap provided on the inner wall of the first housing 110 to snap-fit and fix the microphone assembly 300 at a position corresponding to the sound pickup hole 110f. Alternatively, the second fixing structure may be a countersink structure provided on the inner wall of the third side wall to insert at least a portion of the microphone assembly 300 into the space of the second fixing structure. For these and other reasons, they will not be elaborated further here.

In one embodiment, referring to FIG. 8, for ease of description, the region of the fifth housing wall 110e located within the contour of the holding groove is defined as a bearing wall surface, which is provided as a planar structure perpendicular to the geometric centerline of the sound pickup hole 110f, and the microphone assembly 300 (e.g., the first circuit board 310 or a combination of the first circuit board 310 and the reinforcement plate 340) is arranged parallel to the bearing wall surface. Exemplarily, the reinforcement plate 340 is stacked, affixed, and fixed between the first circuit board 310 and the bearing wall surface.

Using the bearing wall surface may stably fix the portion of the first circuit board 310 provided with the microphone 320 in the holding groove, ensure that the sound inlet channel of the microphone 320 is coaxially connected to the sound pickup hole 110f, thereby creating conditions for enhancing the airtightness of the sound channel of the microphone 320.

In one embodiment, referring to FIG. 10, the fixing retaining wall 151 is provided with a first avoidance notch 152. The first avoidance notch 152 is mainly configured to avoid a structural part of the microphone assembly 300 for electrically connecting to the control board assembly 200. Exemplarily, the microphone assembly 300 may be divided into a connection portion 300a and a sound pickup portion 300b. The sound pickup portion 300b is understood to be a part of the first circuit board 310 where the microphone 320 is provided and needs to be accommodated in the holding groove, and the connection portion 300a is understood to be a part of the first circuit board 310 that leads out from the holding groove and connects to the control board assembly 200. The sound pickup portion 300b is provided at one end of the connection portion 300a, and the sound pickup portion 300b is inserted in the holding groove through coaxial sealed communication between the sound inlet channel and the sound pickup hole 110f. An end of the connection portion 300a that is away from the sound pickup portion 300b may protrude out of the holding groove into the space in which the control board assembly 200 is located with the aid of the first avoidance notch 152.

Based on the first avoidance notch 152, structural interference between the microphone assembly 300 and the fixing retaining wall 151 may be avoided, facilitating the structural connection of the microphone assembly 300 with the first housing 110 and the control board assembly 200, and providing structural support for realizing a sealed communication between the sound inlet hole of the microphone assembly 300 and the sound pickup hole 110f.

In one embodiment, please refer to FIGs. 8 and 10, a sealant is provided in the holding groove, and the sealant may be configured to fill or seal the structural gap between the fixing retaining wall 151 (or the holding groove) and the microphone assembly 300 (e.g., the first circuit board 310, the reinforcement plate 340, etc.), which not only effectively enhances the sealing effect between the sound inlet channel of the microphone assembly 300 and the sound pickup hole 110f, but also firmly fixes the microphone assembly 300 to the first housing 110 to prevent the microphone assembly 300 from detaching from the first housing 110 due to collision or drop, etc.

In some embodiments, a recess structure communicating with the holding groove may be provided in the bearing wall surface, with which the protective mesh 330, the reinforcement plate 340, and other components of the microphone assembly 300 may be accommodated to realize the positioning of the microphone assembly 300 and the sound pickup hole 110f. Simultaneously, it increases the relative height of the fixing retaining wall 151 or the capacity of the holding groove. Thus, in the process of filling the sealant, it prevents the sealant from overflowing the holding groove and affecting the installation and operation of the button assembly 400, the control board assembly 200, or the like, which are arranged adjacent to the microphone assembly 300.

In one embodiment, referring to FIG. 2, FIG. 3, FIG. 8-FIG.10, and FIG. 12, the movement assembly further includes the control board assembly 200, which is electrically connected to the microphone assembly 300 for receiving the sound signal acquired by the microphone assembly 300 and converting the sound signal into an electrical signal for outputting to the speaker apparatus. The microphone assembly 300 and the control board assembly 200 are arranged within the housing space of the first housing 100, and the microphone assembly 300 and the control board assembly 200 are fixedly connected to the inner wall (e.g., the fifth housing wall 110e) of the first housing 110, respectively.

Exemplarily, the wearable device includes two microphone assemblies 300, and the two microphone assemblies 300 are spaced apart from each other at two opposite sides of the control board assembly 200 and are electrically connected to the control board assembly 200, respectively. For example, the control board assembly 200 is arranged between the two microphone assemblies 300 in the first direction. It is also to be understood that the two microphone assemblies 300 are spaced apart in the interior of the housing assembly 100, and that the control board assembly 200 is provided between the two microphone assemblies 300 in an arrangement direction of the two microphone assemblies 300.

Therefore, by fixing the control board assembly 200 and the microphone assemblies 300 to the inner wall of the first housing 110, and by using the first housing 110 as a mounting carrier, the structural integration between the control board assembly 200, the microphone assemblies 300, and the housing assembly 100 may be further realized, reducing the number of related connecting parts, and realizing further full utilization of the structure and space of the housing assembly 100. Additionally, by utilizing the opening of the first housing 110, the microphone assembly 300 and the control board assembly 200 are ensured to enter and exit the interior of the first housing 110 during the disassembly and assembly, which facilitates the disassembly and maintenance of the microphone assembly 300 and the control board assembly 200.

In one embodiment, referring to FIGs. 8-12, the control board assembly 200 includes a second circuit board 210 that has a material hardness set to be greater than a material hardness of the first circuit board 310. For example, the first circuit board 310 may adopt a flexible printed circuit board (FPC), and the second circuit board 210 may adopt a rigid printed circuit board (PCB).

For the purpose of description, two opposite ends of the first circuit board 310 in its length direction (or first direction) are defined as a first end and a second end. The microphone 320, the reinforcement plate 340, and the protective mesh 330 are arranged at the first end of the first circuit board 310. It is also understood that the first end of the first circuit board 310 corresponds to the sound pickup portion 300b or an end of the sound pickup portion 300b away from the connection portion 300a of the microphone assembly 300. The second end of the first circuit board 310 is fixedly connected (e.g., soldered) to the second circuit board 210, and it is also understood that the second end of the first circuit board 310 corresponds to the connection portion 300a of the microphone assembly 300 or an end of the connection portion 300a away from the sound pickup portion 300b.

On the one hand, based on the combination of soft board and hard board formed between the microphone assembly 300 and the control board assembly 200, firstly, it is possible to enhance the compactness of the structural connection between the microphone assembly 300 and the control board assembly 200, saving the occupation of the structural space of the accommodating cavity 100a. Secondly, based on the flexible deformable characteristics of the first circuit board 310 compared to the second circuit board 210, it may be adapted to the structural morphology of the internal space of the housing assembly 100 (e.g., the inner surface of the first housing 110), and the relative mounting position between the microphone assembly 300 and the control board assembly 200 may be flexibly adjusted (e.g., facilitating the microphone assembly 300 to be provided and fixed directly on the first housing 110). Thirdly, it is convenient to disassemble the microphone assembly 300 and the control board assembly 200 to realize recycling of important electronic components, such as the control chip in the control board assembly 200.

On the other hand, in some embodiments in which the housing assembly 100 adopts a mimetic structure, since the third side wall (e.g.: the fifth housing wall 110e) adopts a curved surface structure, the control board assembly 200 and the microphone assembly 300 may have a different direction or generate a difference in height, etc., relative to the inner surface of the third side wall. However, the utilization of the combination of soft board and hard board between the microphone assembly 300 and the control board assembly 200 well adapts to the differences in the mounting positions and mounting forms between the control board assembly 200 and the microphone assembly 300, to conveniently and accurately provide and fix the control board assembly 200 and the microphone assembly 300.

In one embodiment, referring to FIG. 9, the first circuit board 310 has one or more bend regions 310b, which may be prefabricated and formed between the first end and the second end of the first circuit board 310 (specifically, the part of the first circuit board 310 that protrudes out of the holding groove via the first avoidance notch 152) or may be formed naturally by forces during the combination of the microphone assembly 300 with the control board assembly 200 and the housing assembly 100.

In other words, based on the material characteristics of the first circuit board 310 that can undergo flexible deformation, according to the relative position of the control board assembly 200 and the microphone assembly 300 on the first housing 110, the first circuit board 310 may have a certain length surplus by appropriately increasing the length of the first circuit board 310. During the assembly process, the direction or arrangement path of the first circuit board 310 may be adjusted through the formed bend regions 310b.

This not only reduces the precision requirements for the structural connection between the control board assembly 200 and the microphone assembly 300, thereby reducing the difficulty of assembly, but also saves mounting space and facilitates the adjustment of the relative position of the microphone assembly 300 and the control board assembly 200.

In one embodiment, referring to FIGs. 2 -4 and 8-12, the movement assembly further includes the button assembly 400. The button assembly 400 is configured to cooperate with the control board assembly 200 to realize the input of the preset command. The button assembly 400 is provided in the interior of the housing assembly 100 with at least a portion exposed to the housing assembly 100 and is movably connected to the inner wall of the housing assembly 100. For example, the button window 110g is provided through the fifth housing wall 110e of the first housing 110 for at least a portion of the button assembly 400 protruding out of the first housing 110, and the button assembly 400 is pivotally connected to the inner wall of the first housing 110 (e.g., the third housing wall 110c and the fourth housing wall 110d). The inner wall of the first housing 110 (specifically the fifth housing wall 110e) is provided with a third fixing structure, which is mainly configured to support and fix the control board assembly 200 (specifically the second circuit board 210) at a preset position within the accommodating cavity 100a, maintaining a sufficient spacing distance between the control board assembly 200 and the microphone assembly 300, and a sufficient spacing distance between the control board assembly 200 and the first housing wall 110e.

Exemplarily, referring to FIG. 7 and FIG. 10, the third fixing structure may include a plurality of support posts 161 protruding out of the fifth housing wall 110e, and the plurality of support posts 161 are spaced apart around the geometric centerline of the second circuit board 210. Accordingly, a position of the second circuit board 210 corresponding to the support posts 161 is provided with a positioning through-hole 210a. The support posts 161 are inserted in the positioning through-hole 210a, thus the second circuit board 210 or the control board assembly 200 may be supported and fixed to the first housing 110 by spacing apart from and facing the inner surface of the fifth housing wall 110e.

On the one hand, with the help of the support post 161 with the positioning through-hole 210a, it is possible to make the control board assembly 200 and the microphone assembly 300 have a fixed spacing distance from each other in order to avoid signal interference between the control board assembly 200 and the microphone assembly 300.

On the other hand, based on the support posts 161, a certain structural gap may be formed between the second circuit board 210 and the inner wall of the first housing 110, so as to provide a structural space for the button assembly 400 to be assembled in the first housing 110. For example, the second circuit board 210 may be arranged transversely within the accommodating cavity 100a along the third direction (or the width direction of the main body of the wearable device) (it may also be understood that a plane where the second circuit board 210 is located in a plane substantially perpendicular to the third housing wall 110c and the fourth housing wall 110d), thereby utilizing the structural gap between the second circuit board 210 and the fifth housing wall 110e as a structural mounting space as well as an active space for the button assembly 400. This is convenient for controlling the overall width and thickness dimensions of the main body of the wearable device, as well as facilitating the step-by-step fixing and assembly of the microphone assembly 300 and the control board assembly 200 in the first housing 110.

In other embodiments, the third fixing structure may also adopt other suitable structural forms. For example, the support post 161 may protrude out of the second circuit board 210, and a slot structure for the insertion and fixing of the support post 161 is provided on the inner wall of the first housing 110, which will not be discussed herein.

In one embodiment, referring to FIGs. 4-6 and combining with FIGs. 10 and 12, a first limiting structure is also provided between the first housing 110 and the second housing 120. On the one hand, the first limiting structure may restrict the relative position of the first housing 110 and the second housing 120 and enhance the strength of the structural connection between the first housing 110 and the second housing 120. On the other hand, the first limiting structure may prevent the first housing 110 and the second housing 120 from generating a structural deformation at the point where the first housing 110 and the second housing 120 meet each other, so as to avoid extrusion of the control board assembly 200 (specifically, the second circuit board 210) due to the structural deformation of the housing.

For example, referring to FIG. 4-FIG. 6, the first housing 110 and the second housing 120 adopts a housing structure, and surfaces where the first housing 110 connects against the second housing 120 in the second direction are defined as joint surfaces. A joint surface of the first housing 110 is provided with a first limiting flange 171 protruding toward the second housing 120 substantially in the second direction, and a joint surface of the second housing 120 is provided with a second limiting flange 172 protruding toward the first housing 110 substantially in the second direction.

With respect to the assembled and molded state of the housing assembly 100, the first limiting flange 171 is provided on a side of the second limiting flange 172 that is opposite to the accommodating cavity 100a in the third direction (e.g., the first limiting flange 171 is provided on the outside of the accommodating cavity 100a using the accommodating cavity 100a as a reference datum), and it may also be understood that, in an inner-outer directions of the housing assembly 100, the second limiting flange 172 is provided inside the first limiting flange 171.

By means of the second limiting flange 172 abutting the first limiting flange 171 from the inner side of the accommodating cavity 100a, the first limiting structure is formed, which may not only prevent the first housing 110 from shrinking and deforming at the opening due to the influence of the properties of the material, thereby preventing extrusion of the control board assembly 200 (specifically, the second circuit board 210). At the same time, the structural connection strength between the first housing 110 and the second housing 120 at the joint surface may also be enhanced, reducing or eliminating the structural gap between the first housing 110 and the second housing 120 to ensure the integrity of the overall contour of the housing assembly 100.

In some embodiments, the first limiting structure may also be arranged in other structural forms between the joint surface of the first housing 110 and the joint surface of the second housing 120. For example, a flange is provided on the joint surface of the second housing 120, and a slot is provided on a position of the joint surface of the first housing 110 corresponding to the flange, and the flange is aligned and inserted in the slot to form the first limiting structure, which prevents the first housing 110 from deformation in the third direction, so as to prevent the first housing 110 from squeezing the first assembly (e.g., the control board assembly 200).

In some embodiments, the first limiting structure may include a flange and a slot, and the flange and the slot are provided at the joint surfaces of the first housing 110 and the second housing 120 at the same time. By utilizing the structural relationship in which the flange and slot are provided in a one-to-one correspondence, the first housing 110 and the second housing 120 may be prevented from being connected to each other, so as to protect the control board assembly 200, or the like, from being extruded by the housing.

In one embodiment, referring to FIG. 4 to FIG. 6, there are a plurality of groups of first limiting structures, and the plurality of groups of the first limiting structures are arranged on two sides of the accommodating cavity 100a that are opposite to each other in the third direction. For example, on two sides of the second circuit board 210 that are opposite to each other in the third direction. Such a setting has the effect of further preventing the first housing 110 from deformation, and is also conducive to the stability of the structural connection between the first housing 110 and the second housing 120.

Certainly, the first limiting structure may also be spaced apart around the second direction, so as to have a limiting effect on the deformation of the housing from the third direction, the first direction, and the other directions, to ensure that the joint surfaces of the first housing 110 and the second housing 120 may be stabilized against each other.

In one embodiment, referring to FIGs. 4-6, the first limiting structure further includes an avoidance structure primarily configured to avoid a portion of the first assembly or the second assembly (e.g., the control board assembly 200) during assembly of the first housing 110 and the second housing 120 to adapt to the spatial dimensions required by the first assembly or the second assembly for the accommodating cavity 100a. Exemplarily, the first limiting flange 171 is located on a side of the second limiting flange 172 that is opposite to the accommodating cavity 100a in the third direction, and the avoidance structure may be a notch provided on the second limiting flange 172, which, for the sake of easy differentiation and description, is defined as the second avoidance notch 173.

Using the second avoidance notch 173 during assembly of the first housing 110 and the second housing 120 may enable the second housing 120 to adapt to the contour dimensions of the second circuit board 210 to avoid or accommodate a portion of the second circuit board 210 toward the exterior of the housing assembly 100 in the third direction. This not only ensures that the joint surfaces of the first housing 110 and the second housing 120, as well as the first limiting flange 171 and the second limiting flange 172, may effectively abut against each other, but also avoids structural extrusion or structural interference with the control board assembly 200, or the like.

In other embodiments, the avoidance structure may also be a recess structure provided on a surface of a side of the second limiting flange 172 facing the accommodating cavity 100a, and may also be a structural gap between two adjacent second limiting flanges 172 in the first direction.

The above specific examples applied to illustrate the present disclosure are only used to assist in understanding the present disclosure and are not intended to limit the present disclosure. For a person skilled in the art to which the present disclosure belongs, various simple deductions, deformations, or substitutions may also be made based on the ideas of the present disclosure.

## Claims

1. A wearable device, comprising:
a housing assembly, including a sound pickup hole, wherein the sound pickup hole is provided through a housing wall of the housing assembly, so that an interior of the housing assembly is connected to an exterior of the housing assembly; and
a microphone assembly arranged in the interior of the housing assembly, wherein the microphone assembly is fixedly connected to an inner wall of the housing assembly, a sound inlet channel of the microphone assembly is sealed to the sound pickup hole, and the microphone assembly is configured to pick up an external sound signal input via the sound pickup hole.

2. The wearable device of claim 1, wherein the inner wall of the housing assembly is provided with a second fixing structure; the second fixing structure is configured to fix the microphone assembly to keep the sound inlet channel of the microphone assembly in coaxial continuity with the sound pickup hole.

3. The wearable device of claim 2, wherein the second fixing structure includes a fixing retaining wall, the fixing retaining wall protrudes out of the inner wall of the housing assembly, and a holding groove is formed between the fixing retaining wall and the inner wall of the housing assembly; and
a sound outlet end of the sound pickup hole is provided within a contour of the holding groove, and at least a portion of the microphone assembly is inserted within the holding groove.

4. The wearable device of claim 3, wherein the inner wall of the housing assembly provided within the contour of the holding groove is a bearing wall surface, and the bearing wall surface is provided as a planar structure perpendicular to a geometric centerline of the sound pickup hole; and
the microphone assembly is arranged parallel to the bearing wall surface and is attached against the bearing wall surface.

5. The wearable device of claim 3, wherein the microphone assembly includes a connecting portion and a sound pickup portion, the sound pickup portion is provided at one end of the connecting portion and inserted into the holding groove, and a sound inlet channel of the sound pickup portion is in sealed communication with the sound pickup hole; and
a first avoidance notch is provided on the fixing retaining wall, and the first avoidance notch is configured to avoid the connecting portion, so that another end of the connecting portion protrudes into the holding groove.

6. The wearable device of claim 3, wherein a sealant is provided between the fixing retaining wall and the microphone assembly within the holding groove.

7. The wearable device of claim 1, wherein the wearable device comprises two sound pickup holes and two microphone assemblies, the two the sound pickup holes correspond one-to-one and are sealed to the two the microphone assemblies, and sound inlet ends of the two the sound pickup holes are spaced apart from each other.

8. The wearable device of claim 7, wherein a surface of the housing assembly provided with the sound inlet ends of the two sound pickup holes is a first surface, the first surface is a curved surface with a preset length, and the sound inlet ends of the two sound pickup holes are spaced apart from each other in a length direction of the first surface.

9. The wearable device of any one of claims 1-8, wherein the microphone assembly includes a microphone, a first circuit board, and a protective mesh, wherein
the protective mesh is fixed on an inner wall of the housing assembly by covering a sound outlet end of the sound pickup hole; and
the first circuit board is stacked and fixed to a side of the protective mesh that is opposite to the sound pickup hole, the microphone is provided on a side of the first circuit board that is opposite to the protective mesh, the first circuit board is provided with a sound guiding hole passing through the first circuit board, and the sound pickup hole passes through the sound guiding hole in sealed communication with a sound inlet channel of the microphone.

10. The wearable device of claim 9, wherein the protective mesh includes a first adhesive layer, a mesh layer, and a second adhesive layer sequentially stacked and fixed, wherein the first adhesive layer is configured to stack and fix the protective mesh to the inner wall of the housing assembly, the second adhesive layer is configured to stack and fix the protective mesh to the first circuit board, and through-hole structures are provided at a position of the first adhesive layer corresponding to the sound pickup hole and at a position of the second adhesive layer corresponding to the sound guiding hole.

11. The wearable device of claim 9, wherein the microphone assembly further includes a reinforcement plate, the reinforcement plate is stacked and fixed between the first circuit board and the protective mesh, and a material hardness of the reinforcement plate is greater than a material hardness of the first circuit board.

12. The wearable device of any one of claims 1-8, further comprising a control board assembly arranged in the interior of the housing assembly, the control board assembly is fixedly connected to the inner wall of the housing assembly; and
the control board assembly is electrically connected to the microphone assembly for receiving a sound signal captured by the microphone assembly.

13. The wearable device of claim 12, wherein the microphone assembly includes a first circuit board and a microphone, the first circuit board includes a first end and a second end that are opposite to each other along a length direction of the first circuit board, the microphone is provided at the first end of the first circuit board, and a sound inlet channel of the microphone is in sealed communication with the sound pickup hole; and
the control board assembly includes a second circuit board, the second end of the first circuit board is connected to the second circuit board, and a material hardness of the first circuit board is less than a material hardness of the second circuit board.

14. The wearable device of claim 13, wherein the first circuit board is a flexible printed circuit board, and the second circuit board is a rigid printed circuit board.

15. The wearable device of claim 13, wherein the first circuit board includes one or more bend regions, the one or more bend regions are formed between the first end and the second end of the first circuit board.

16. The wearable device of claim 12, further comprising a button assembly, wherein the button assembly is provided in the interior of the housing assembly with at least a portion exposed to the housing assembly; and
the button assembly is movably connected to the inner wall of the housing assembly for cooperating with the control board assembly to input a preset command.

17. The wearable device of claim 16, wherein the inner wall of the housing assembly is further provided with a third fixing structure, the third fixing structure is fixedly connected to the control board assembly to restrict and fix the control board assembly to a side of the button assembly that is opposite to the inner wall of the housing assembly.

18. The wearable device of claim 17, wherein the third fixing structure includes a support post, the support post protrudes out of the inner wall of the housing assembly, and a position of the control board assembly corresponding to the support post is provided with a positioning through-hole; and
the support post is arranged through the positioning through-hole to maintain a preset distance between the control board assembly and the inner wall of the housing assembly.

19. The wearable device of claim 12, wherein the wearable device comprises two microphone assemblies, and the two microphone assemblies are spaced apart in the interior of the housing assembly; and
the control board assembly is provided between the two microphone assemblies in an arrangement direction of the two microphone assemblies.

20. The wearable device of claim 12, wherein the housing assembly includes a first housing and a second housing, the first housing includes an opening;
the opening is configured to allow the control board assembly and the microphone assembly to enter the first housing, so that the control board assembly and the microphone assembly are connected to an inner wall of the first housing, respectively; and
the sound pickup hole is provided through a housing wall of the first housing, and the second housing seals the opening and is connected to the first housing.

21. The wearable device of claim 20, wherein the first housing and the second housing are opposite to each other and connected against each other, and surfaces where the first housing connects against the second housing are joint surfaces, wherein
a joint surface of the first housing is provided with a first limiting flange protruding toward the second housing, and a joint surface of the second housing is provided with a second limiting flange protruding toward the first housing; and
in an inner-outer direction of the housing assembly, the second limiting flange abuts against an inner side of the first limiting flange to limit deformation of the first housing in the inner-outer direction.

22. The wearable device of claim 21, wherein the second limiting flange is provided with an avoidance structure, and the avoidance structure is configured to avoid the control board assembly.

23. The wearable device of claim 20, wherein each of the first housing and the second housing is a one-piece structure made of polyimide material.

24. The wearable device of any one of claims 1-23, further comprising an in-ear speaker, wherein the in-ear speaker includes a speaker assembly and a wearable assembly, and the wearable assembly is connected between the housing assembly and the speaker assembly; and
the housing assembly is capable of being worn between a dorsal side of an ear of a user and the head of the user, and the speaker assembly is capable of being inserted within an ear canal of the user.

25. The wearable device of any one of claims 1-24, wherein the wearable device is an air-conduction hearing aid.
